# EUROPEAN PATENT APPLICATION

(11) **EP 4 715 701 A1**
(43) Date of publication of application: **25.03.2026**
(21) Application number: 25203626.4
(22) Date of filing: 22.09.2025
(51) Int. Cl.: G06Q 10/0631, G06Q 10/109, H04L 12/18, G06F 40/20, G06N 20/00, G10L 15/26

(54) **SYSTEM AND METHOD FOR ADVANCED DATA INSIGHTS APPARATUS**

(30) Priority: 20.09.2024 US 202418892139
(71) Applicant: Mitel Networks Corporation, Ottawa, Ontario K2K 3K1 (CA)
(72) Inventor: Ravindrakumar, Sourab, 562123 Nelamangala (IN); Murthy, Tejas, 560078 Bangalore (IN); Naidoo, Logendra, Ottawa, K1S 0W8 (CA)
(74) Representative: McDougall, James

(57) **Abstract**

A computerized meeting system is configured to provide advanced data to determine the respective skills of meeting participants. The system includes a meeting server configured to host meetings, a plurality of participant devices in communication with the meeting server, a participant skill determination engine in communication with the meeting server and with a host device that is assigned to a meeting host, a first database of participant attributes in communication with the participant skill determination engine, and a second database of participant participation in prior meetings in communication with the participant skill determination engine. The participant skill determination engine is provided a meeting topic by the meeting server during the current meeting, and based on the topic queries the first database and the second database to (a) determine the name of a participant suited to address the topic, and (b) communicate the participant name to the host device.

## Description

### FIELD

This disclosure relates to virtual meetings. More particularly, the disclosure relates to methods and systems for providing participant insights for a virtual meeting.

### BACKGROUND

Traditional meetings often struggle to utilize the diverse knowledge and interests of participants, leading to inefficiencies, disengagement, and missed opportunities for collaboration. Hosts tend to lack comprehensive insights into attendees' backgrounds, interests, and engagement levels, which can result in suboptimal discussions and outcomes. Existing solutions for gathering participant information (e.g., pre-meeting surveys, manual introductions, and ad-hoc attempts to gauge interest and expertise during discussions) are manual, time-consuming, and limited in scope, hindering the host's ability to tailor the meeting experience to individual preferences and expertise. This gap in understanding and customization can impede the achievement of meeting objectives and diminish the overall effectiveness of group interactions.

### SUMMARY

A first aspect of this disclosure provides a computerized meeting system configured to provide advanced data to determine the respective skills of meeting participants, wherein the computerized meeting system comprises: a meeting server configured to host meetings; a plurality of participant devices in communication with the meeting server, wherein each participant device is assigned to a unique participant; a participant skill determination engine in communication with the meeting server and with a host device that is assigned to a meeting host; a first database of participant attributes in communication with the participant skill determination engine, the first database of participant attributes includes self-identified expertise attributes; and a second database of participant participation in prior meetings and in a current meeting, wherein the second database is in communication with the participant skill determination engine; wherein the participant skill determination engine is provided a meeting topic by the meeting server during the current meeting, and based on the topic queries the first database and the second database to (a) determine the name of a participant suited to address the topic, and (b) communicate the participant name to the host device.

After the participant name is communicated to the host device, the host may query using the host device a unique one of the plurality of participant devices assigned to the participant suited to address the topic, wherein the query regards the topic.

The first database or the second database may be resident on a backend server, the meeting server, or the participant skill determination engine.

The computerized meeting system may further comprise a speech recognition processor configured to generate text from spoken language during the current meeting, and a large language module (LLM) configured to analyze the text.

The host may utilizes the host device to initiate the participant skill determination engine to search the first database and the second database for each meeting participant.

The computerized meeting system may further comprise one or more APIs in communication with the first database wherein each of the one or more APIs is configured to (a) communicate with at least one authorized private data source that includes private data related to the skill of a meeting participant, and (b) cause the private data to be transmitted to the first database.

The computerized meeting system may further comprise a web scraping tool in communication with the first database, wherein the web scraping tool may be configured to collect public data from publicly available sources, including social media and professional websites, and to transfer the public data to the first database.

Participant consent may be secured for accessing the participant's data from the at least one authorized private data source.

The computerized meeting system may further include a database of privacy laws in communication with the first database and the one or more APIs, and data of at least one authorized private data source may be collected in accordance with privacy laws in the database of privacy laws.

The computerized meeting system may further include a processor to deduplicate data in the first database and the second database in order to eliminate redundancy to assist in obtaining accurate respective skills of meeting participants.

A second aspect of this disclosure provides a computerized method for providing advanced data to determine the respective skills of meeting participants, wherein the computerized method comprises the following steps: the meeting server hosting a current meeting; a plurality of meeting participants joining the current meeting by using participant devices in communication with the meeting server, and wherein each participant device is assigned to a unique one of the plurality of participants; a participant determination engine collecting attributes of each of the plurality of meeting participants from a first database, wherein the attributes were obtained from one or more private databases and one or more public databases, the attributes include self-identified expertise attributes; and the participant determination engine collecting attributes of each of the plurality of meeting participants from a second database, wherein the attributes are based on participant participation in prior meetings and in the current meeting; the meeting server providing a meeting topic, and keywords and phrases related to the topic, to the participant skill determination engine during the current meeting, and based on the topic and keywords and phrases, the participant skill determination engine determining the name of a meeting participant suited to address the topic and communicating the participant name to a host device.

The computerized method may further comprise the step of providing to the participant skill determination engine to assist in determining the name of a meeting participant suited to address the topic, each meeting participant's (a) job title, (b) education background, (c) work history, (d) hobbies, and (e) professional certifications.

The computerized method may further comprise the steps of using a natural language processor (NLP) in communication with the participant skill determination engine, wherein the NLP identifies context and nuance of the speech of each of the plurality of meeting participants stored in the second database, in order to determine sentiment and assist in enhancing the determination of participant skill level.

The computerized method may further comprise the steps of (a) using algorithms to analyze a categorized data to detect correlations and patterns, and (b) applying predictive models to assess each participant's skill level for a topic.

The computerized method may further comprise the step of the meeting server and participant skill determination engine compiling a summarized overview of the current meeting, in which the overview provides a rating of how accurately the participant skill determination engine participant skill level was assessed for each topic.

The computerized method may further comprise the step of, based on input related to the topic by the meeting participant selected by the participant skill determination engine as suited to address the topic, the meeting host or the participant skill determination engine, determining a quality of the input to the topic, and assigning an input score to the input.

The computerized method may further comprise using an AI learning module in communication with the participant skill determination engine, wherein the AI learning module or the host device changes an algorithm used by the participant skill determination engine to determine participant skill levels if the input score for a predetermined number of current meeting topics is beneath a preset level.

A third aspect of this disclosure provides a computerized meeting apparatus configured to provide advanced data to determine the respective skill of meeting participants, wherein the computerized meeting apparatus comprises: (a) a meeting server; (b) a plurality of participant devices in communication with the meeting server, wherein each participant device is assigned to a unique participant; (c) a participant skill determination engine in communication the meeting server and with a host device; (d) a first database of participant attributes gathered from authorized private data sources and public data sources; (e) a second database of participant participation in prior meetings and in a current meeting; and (f) a processor and a tangible, non-transitory memory configured to communicate with the processor, the non-transitory memory having stored instructions which, when executed by the processor, are configured to cause the computerized meeting apparatus to execute a method including the following steps: the meeting server starting the current meeting; each of the plurality of user devices connecting to the current meeting via the meeting server; the meeting server or the host device communicating a topic of the current meeting to the participant skill determination engine; the participant skill determination engine, based on the topic, querying the first database and the second database to determine the name of a participant suited to address the topic and to communicate the participant name to the host device; and a host either querying the participant identified by the participant skill determination engine as suited to address the topic, or instead direct a query to a known expert on the topic in order to enhance discussion efficiency and outcome relevancy.

The stored instructions may be executed by the processor, may be configured to provide one or more topics to the participant skill determination engine prior to the start of the current meeting, and based on the one or more topics, the participation skills engine may query the first database and the second database to determine a plurality of names of participants suited to attend the current meeting and to communicate the name of the plurality of participants to the host device, wherein the host device uses plurality of names of participants to tailor invitations to the current meeting.

The participant attributes may comprise (a) education, (b) title, (c) type of work experience, (d) length of work experience, (e) current job title, (f) past job titles, (g) hobbies, (h) presentations, (i) awards, and (j) training courses taken.

### BRIEF DESCRIPTION OF THE DRAWINGS

The subject matter of the present disclosure is particularly pointed out and distinctly claimed in the concluding portion of this specification. A more complete understanding of the present disclosure, however, may best be obtained by referring to the detailed description and claims when considered in connection with the drawing figures, wherein like numerals denote like elements and wherein:
FIG. 1 illustrates an electronic, cloud-based or server-based communication system adapted to provide participant data insights according to aspects of this disclosure.
FIG. 2 illustrates a block diagram of an electronic, computerized process for expertise aggregation and analysis according to aspects of this disclosure.
FIG. 3 illustrates a block diagram of an electronic, computerized process for data cleansing and analysis according to aspects of this disclosure.
FIG. 4 illustrates a block diagram of an electronic, computerized process for predictive accuracy and engagement enhancement according to aspects of this disclosure.

It will be appreciated that elements in the figures are illustrated for simplicity and clarity and have not necessarily been drawn to scale. For example, the dimensions of some of the elements in the figures may be exaggerated relative to other elements to help to improve understanding of illustrated embodiments of the present invention.

### DETAILED DESCRIPTION

The following detailed description of various embodiments herein refers to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

The process flows and screenshots depicted are merely embodiments and, unless otherwise noted, are not intended to limit the scope of the disclosure. For example, the steps recited in any of the method or process descriptions may be executed in any order and are not limited to the order presented. It will be appreciated that the following description makes appropriate references not only to the steps and user interface elements, but also to the various system components as described herein. It should be understood that, although exemplary embodiments are illustrated in the figures and described herein, the principles of the present disclosure may be implemented using any number of techniques, whether currently known or not. The present disclosure should in no way be limited to the exemplary implementations and techniques illustrated in the drawings and described below. Unless otherwise specifically noted, articles depicted in the drawings are not necessarily drawn to scale.

Computer programs (also referred to as computer control logic) can be stored in main memory and/or secondary memory. Computer programs may also be received via communications interface. Such computer programs, when executed, enable the computer system to perform the features as discussed herein. In particular, the computer programs, when executed, enable the processor to perform the features of various embodiments. Accordingly, such computer programs represent controllers of the computer system.

These computer program instructions may be loaded onto a general-purpose computer, special purpose computer, or other programmable data processing apparatus to produce a machine, such that the instructions that execute on the computer or other programmable data processing apparatus create means for implementing the functions specified in the flowchart block or blocks. These computer program instructions may also be stored in a computer-readable memory that can direct a computer or other programmable data processing apparatus to function in a particular manner, such that the instructions stored in the computer-readable memory produce an article of manufacture including instruction means which implement the function specified in the flowchart block or blocks. The computer program instructions may also be loaded onto a computer or other programmable data processing apparatus to cause a series of operational steps to be performed on the computer or other programmable apparatus to produce a computer-implemented process such that the instructions which execute on the computer or other programmable apparatus provide steps for implementing the functions specified in the flowchart block or blocks.

**In** various embodiments, software may be stored in a computer program product and loaded into a computer system using a removable storage drive, hard disk drive, or communications interface. The control logic (software), when executed by the processor, causes the processor to perform the functions of various embodiments as described herein. In various embodiments, hardware components may take the form of application specific integrated circuits (ASICs). Implementation of the hardware so as to perform the functions described herein will be apparent to persons skilled in the relevant art(s).

As will be appreciated by one of ordinary skill in the art, the system disclosed herein may be embodied as a customization of an existing system, an add-on product, a processing apparatus executing upgraded software, a stand-alone system, a distributed system, a method, a data processing system, a device for data processing, and/or a computer program product. Accordingly, any portion of the system or a module may take the form of a processing apparatus executing code, an internet-based embodiment, an entirely hardware-based embodiment, or an embodiment combining aspects of the internet, software, and hardware. Furthermore, the system may take the form of a computer program product on a computer-readable storage medium having computer-readable program code means embodied in the storage medium. Any suitable computer-readable storage medium may be utilized, including hard disks, optical storage devices, magnetic storage devices, and/or the like.

The system and method may be described herein in terms of functional block components, screen shots, optional selections, and various processing steps. It should be appreciated that such functional blocks may be realized by any number of hardware and/or software components configured to perform the specified functions. For example, the system may employ various integrated circuit components, e.g., memory elements, processing elements, logic elements, look-up tables, and the like, which may carry out a variety of functions under the control of one or more microprocessors or other control devices. Similarly, the software elements of the system may be implemented with any programming or scripting language such as C, C++, C#, JAVA^{®}, JAVASCRIPT^{®}, JAVASCRIPT^{®} Object Notation (JSON), VBScript, Macromedia COLD FUSION, COBOL, MICROSOFT^{®} company's Active Server Pages, assembly, PERL^{®} , PHP, awk, PYTHON^{®}, Visual Basic, SQL Stored Procedures, PL/SQL, any UNIX^{®} shell script, and extensible markup language (XML) with the various algorithms being implemented with any combination of data structures, objects, processes, routines or other programming elements. Further, it should be noted that the system may employ any number of techniques for data transmission, signaling, data processing, network control, and the like. Still further, the system could be used to detect or prevent security issues with a client-side scripting language, such as JAVASCRIPT^{®}, VBScript, or the like.

For the sake of brevity, data networking, application development, and other functional aspects of the systems (and components of the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in a practical system.

Systems, apparatus, and methods of the present disclosure address the challenges of gathering meeting participant information by providing hosts with a structured overview of participant knowledge and interests, facilitating more informed and engaging meetings that leverage the diverse perspectives and expertise of all attendees.

In various aspects, advanced data processes utilize a vast array of data to develop a personalized data insights apparatus, which enhances the meeting environment by providing hosts with tailored, real-time insights into each participant's knowledge, interests, and engagement levels. This system dynamically determines the relevance of attendees' skillsets, automatically making some invitees optional or uninviting those who lack necessary expertise. During meetings, it directs contributions from non-experts to recognized experts on topics, thereby streamlining discussions and leveraging the right expertise at the right time. By aligning meeting activities with individual capabilities and expectations, this approach not only makes interactions more meaningful and inclusive but adds to productivity, collaboration, and cost-effectiveness.

In various aspects, a meeting system (also referred to as a personalized data insights apparatus) elevates meeting dynamics by strategically engaging the right participants at the right moments. As meetings unfold and topics evolve, the system identifies key contributors through real-time analysis of their expertise. An intuitive indicator on the host's dashboard can signal when to direct discussions towards these participants, enhancing dialogue efficiency and outcome relevance. This streamlined approach is powered by sophisticated data integration, analyzing elements like work history and educational achievements to ensure that every discussion is relevant and purposeful.

In various aspects, the meeting system redefines the dynamics of meeting environments by integrating a sophisticated system of participant analysis. This system cross-references publicly and privately accessible data through APIs, encompassing social media, professional profiles, bios, and internet searches, alongside insights gleaned from past interactions such as emails and meeting histories. In various aspects, an objective of the present disclosure is to optimize meeting effectiveness by providing a real-time, comprehensive view of each participant's background, expertise, and interests. This approach not only enhances the meeting experience but also fosters deeper collaboration and efficiency.

During the meeting setup and in real-time proceedings, the system can utilize semantic analysis to accurately assess and update the relevance of each attendee's skills and expertise. The system directs discussions, making some participants' attendance optional or excluding those without the necessary expertise, thereby streamlining focus and participation. In live meetings, the system can direct queries and topics to the most knowledgeable individuals, enhancing the decision-making process and ensuring that discussions are both productive and cost-effective. This method, which continually updates participant profiles with new data, bolsters meeting productivity and collaborative success, ensuring that every interaction is as informative as possible and strategically aligned with the meeting's objectives. The system can be operated together with existing virtual meeting software applications (e.g., ZOOM^{®}, TEAMS^{®}, WEBEX^{®}, etc.) to make the meeting application proactive in ensuring the right participants attend. If no expertise is available, the system can label discussions as "exploratory".

### Notes on Privacy:

Societal expectations of privacy have continually adapted, reflecting a shift in what once seemed invasive. Consider the widespread acceptance of practices such as social media monitoring, location tracking, and the sharing of health and financial data - all once contentious due to privacy concerns, now widely embraced for their benefits. These shifts underscore how privacy lines are regularly recalibrated in favor of functionality and convenience. A meeting system, which harnesses both public and private information to optimize participant engagement, can operate within this modern context. By ensuring transparency and control, similar to accepted digital norms, the meeting system aligns with current societal standards, suggesting that such a recalibration around privacy is not only expected but can enhance collaborative efficiency without compromising individual privacy.

As used herein the term, "engine" refers to logic embodied in hardware or software instructions, which can be written in a programming language, such as C, C++, Objective-C, COBOL, JAVA^{™}, JAVASCRIPT^{®}, JAVASCRIPT^{®} Object Notation (JSON), PHP, Perl, HTML, CSS, JavaScript, Ruby, VBScript, ASPX, Microsoft .NET^{™} languages such as C#, and/or the like. An engine may be compiled into executable programs or written in interpreted programming languages. Software engines may be callable from other engines or from themselves. Engines described herein refer to one or more logical modules that can be merged with other engines or applications or can be divided into sub-engines. The engines can be stored in non-transitory computer-readable medium or computer storage device and be stored on and executed by one or more general purpose computers, thus creating a special purpose computer configured to provide the engine. In various aspects, an engine can include a large language model (LLM), among other components and/or functions.

According to various embodiments, the aspects of the present disclosure are implemented using a combination of both the hardware and the software. As used herein, the term "server" as described herein may include server hardware, server software, applications and/or services hosted by the server, and/or combinations thereof. The meeting system may also use one or more database systems communicatively coupled to the one or more servers for storing various data, such as, meeting data, participant data and/or the like.

The various system components discussed herein may include one or more of the following: a host server or other computing systems including a processor for processing digital data; a memory coupled to the processor for storing digital data; an input digitizer coupled to the processor for inputting digital data; an application program stored in the memory and accessible by the processor for directing processing of digital data by the processor; a display device coupled to the processor and memory for displaying information derived from digital data processed by the processor; and a plurality of databases. Various databases used herein may include meeting participant data; meeting data; and/or like data useful in the operation of the system. As those skilled in the art will appreciate, a computer may include an operating system (e.g., Windows NT, Windows 95/98/2000, Windows XP, Windows Vista, Windows 7, Windows 10, OS2, UNIX, Linux, Solaris, MacOS, etc.) as well as various conventional support software and drivers typically associated with computers.

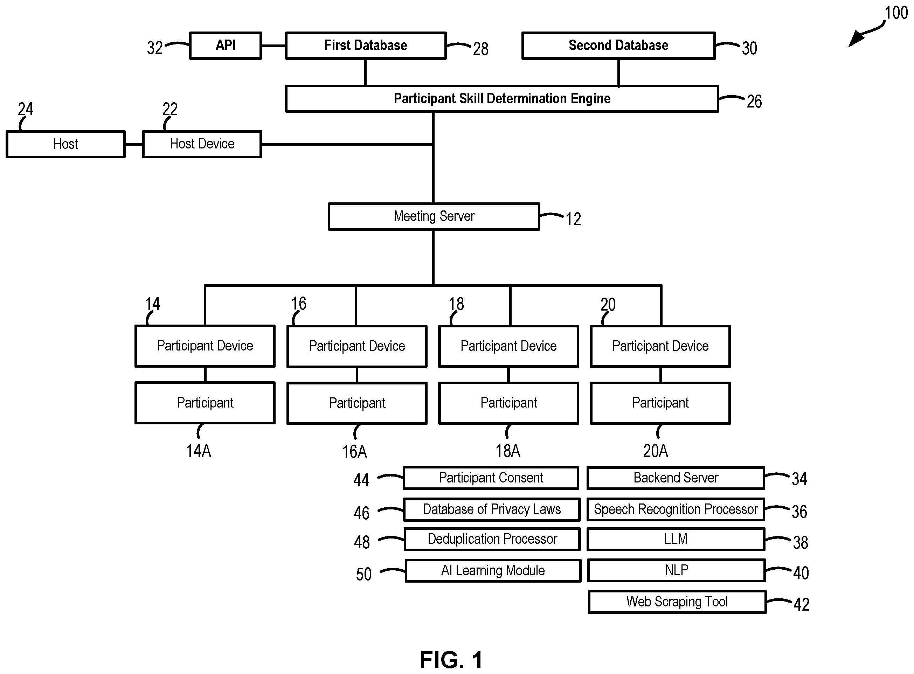

FIG. 1 illustrates an electronic, cloud-based or server-based communication system 100 (also referred to as a computerized meeting system) adapted to provide participant data insights, in accordance with various aspects. System 100 includes a meeting server 12 configured to host meetings. The meeting server 12 can be in electronic communication with a plurality of participant devices (e.g., participant device 14, participant device 16, participant device 18, and participant device 20) during a meeting. Each participant device 14, 16, 18, and 20 can be assigned to a unique participant (e.g., participant 14A, participant 16A, participant 18A, and participant 20A, respectively). Each participant device 14, 16, 18, and 20 can be, or be embodied in, a computer (e.g., a personal computer, a handheld device, a laptop, a tablet, etc.).

The meeting server 12 can be in electronic communication with a host device 22 during the meeting. The host device 22 can be assigned to a unique meeting host 24. The host device 22 can be, or be embodied in, a computer (e.g., a personal computer, a handheld device, a laptop, a tablet, etc.).

The server 12 can be in electronic communication with a participant skill determination engine 26 during the meeting. The participant skill determination engine 26 can be in electronic communication with a first database 28. The first database 28 can store participant attributes (e.g., attributes of each of the participants 14A, 16A, 18A, 20A). Participant attributes can include participant education, participant title, type of work experience, length of work experience, current job title, past job titles, hobbies, presentations, awards, training courses taken, and the like. The first database 28 can store participant knowledge level of various topics. The participant skill determination engine 26 can be in electronic communication with a second database 30. The second database 30 can store participant participation in prior meetings and/or in a current meeting (e.g., participation of the participants 14A, 16A, 18A, 20A). The first database 28 and/or the second database 30 can be resident on a backend server 34, the meeting server 12, or the participant skill determination engine 26. The skill determination engine 26 can be resident on the backend server 34, the meeting server 12, and/or the host device 22.

In various aspects, the host 24 can utilize the host device 22 to initiate the participant skill determination engine 26 to search the first database 28 and/or the second database 30 for each meeting participant (e.g., participant 14A, 16A, 18A, and 20A). The participant skill determination engine 26 can be provided a meeting topic by the meeting server 12 during the current meeting. The participant skill determination engine 26 can determine a meeting topic, or a change in a meeting topic, based on conversation taking place during the meeting. Based on the topic, the participant skill determination engine 26 can query the first database 28 and/or the second database 30 to identify a participant suited to address the topic. The participant skill determination engine 26 can communicate the participant to the host device 22. For example, the participant skill determination engine 26 can determine the name of a participant suited to address the topic and communicate the participant name to the host device 22. For example, a prompt can be configured to be displayed on the host device 22 indicating which participant is suited to address the current meeting topic (or an upcoming meeting topic if known). Any of the participant information may be distributed and/or accessed via a software enabled link, wherein the link may be sent to the host device 22 via an email, text, post, social network input, and/or any other method. In various aspects, the participant skill determination engine 26 causes a graphical user interface (GUI) with participant information to display on a screen of the host device 22.

In various aspects, the system 100 includes a speech recognition processor 36 in communication with the participant skill determination engine 26 and configured to generate text from spoken language during the current meeting. The system 100 can further include a large language module (LLM) 38 in communication with the speech recognition processor 36 and configured to analyze the text. For example, the text can be analyzed to determine a topic of the current meeting. The text can be compared with known keywords (e.g., stored in first database 28, second database 30, or another database) for determining a meeting topic.

The participant skill determination engine 26 can search the first database 28 and/or the second database 30 for a participant suited to address the topic. In response to receiving a participant identity suited to address a topic of the current meeting from the participant skill determination engine 26, the host device 22 can query a unique one of the plurality of participant devices (e.g., one of participant devices 14, 16, 18, and 20) assigned to the participant suited to address the topic. The query can regard the topic. In various aspects, a prompt can be configured to be displayed on the suitable participant device identifying the participant as suitable for addressing the topic. In various aspects, the host can verbally inquire with the identified participant as to the present topic.

In various aspects, the system 100 further includes a natural language processor (NLP) 40 in communication with the participant skill determination engine 26. The NLP 40 can identify the context and nuance of the speech of each of the plurality of meeting participants. The NLP 40 can identify the context and nuance of the speech of each of the plurality of meeting participants stored in the second database. The NLP 40 can identify the context and nuance of the speech of each of the plurality of meeting participants in order to determine sentiment and assist in enhancing the determination of participant skill level. For example, the NLP 40 can be used to detect a participants confidence level and/or knowledge level regarding a particular topic.

In various aspects, one or more API's (e.g., API 32) can be in communication with the first database 28. The API 32 can be configured to communicate with at least one authorized private data source that includes private data related to the skill of a meeting participant. The API 32 can be configured to cause the private data to be transmitted to the first database 28. Private data sources include social media and professional websites.

In various aspects, the system 100 further includes a web scraping tool 42 in communication with the first database 28. The web scraping tool 42 can be configured to collect public data from publicly available sources related to the skill of a meeting participant. The web scraping tool 42 can be configured to cause the public data to be transferred to the first database. Publicly available sources can include social media and professional websites. Example data sources include LINKEDIN^{®}, FACEBOOK^{®}, INDEED^{®}, YOUTUBE^{®}, among others.

In various aspects, participant consent can be secured for accessing the participant's data from the at least one private data source. In this regard, the system 100 can further include a participant consent module 44 for acquiring participant consent for accessing the participant's data from the at least one private data source. Participant consent can be acquired in compliance with privacy laws. In this regard, the system 100 can include, and/or be in communication with, a database of privacy laws 46 to ensure privacy laws are complied with in various jurisdictions. The database of privacy laws 46 can be in communication with the first database 28 and/or the APIs 32. The data of the at least one private data source can be collected in accordance with privacy laws in the database of privacy laws 46.

In various aspects, the system 100 further includes a processor 48 to deduplicate data in the first database 28 and/or the second database 30 in order to eliminate redundancy to assist in obtaining accurate respective skills of meeting participants. The participant skill determination engine 26 and the deduplication processor 48 can be executed using the same processor or using different processors.

In various aspects, the system 100 further includes an AI learning module 50 in communication with the participant skill determination engine 26. The AI learning module 50 and/or the host device 22 can change the algorithm used by the participant skill determination engine 26 to determine participant skill levels if the input score for a predetermined number of current meeting topics is beneath a preset level. In various aspects, an algorithm can use the average of a current skill score and an average input score (e.g., a present skill score used to update the previous skill score) to generate the new skill score. In this manner, the system can balance past performance with recent contributions so that both past and present performance are relevant. In various aspects, a resident power collaborator can be appointed the expert such that demonstrated practical experience counts for being determined to be the expert or a topic.

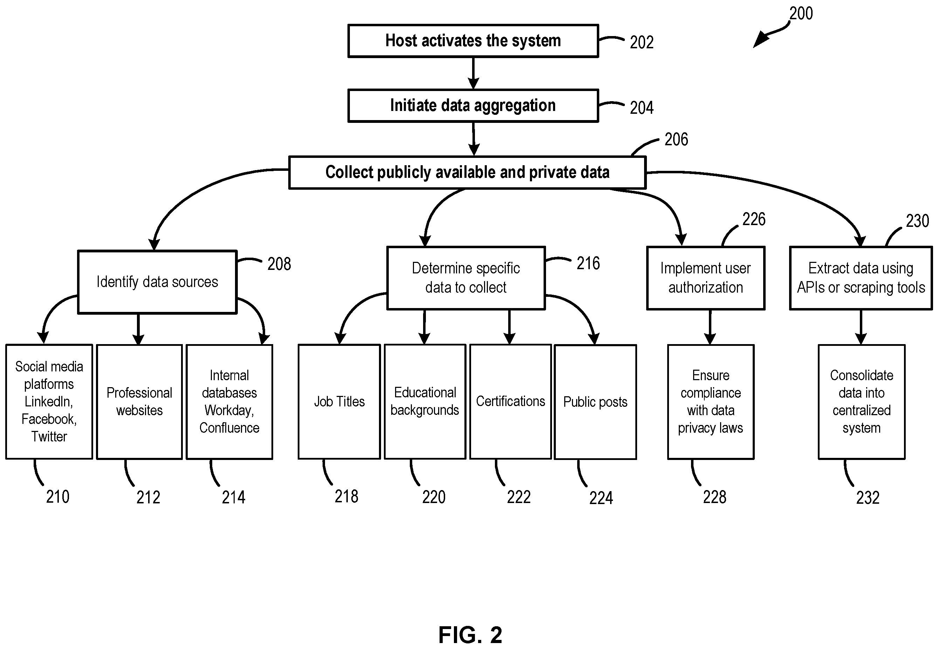

FIG. 2 illustrates a flow chart for a method 200 for participant expertise aggregation and analysis, in accordance with various embodiments. For ease of description, the method 200 is described below with reference to FIG. 1. The method 200 of the present disclosure, however, is not limited to use of the exemplary system 100 of FIG. 1.

In step 202, the method 200 includes the host 24 initiating the system 100 to start data aggregation. For example, the host 24 can use the host device 22 to activate the participant skill determination engine 26 during a virtual meeting.

In step 204, the system 100 initiates data aggregation. For example, the system 100 can use one or more APIs 32 and/or web scraping tools 42 to collect data from publicly available and/or authorizes private sources, which can include social media, professional websites, and internal databases (step 206). At step 208, the system 100 can identify one or more data sources 208 for participant data aggregation, such as social media platforms 210, professional websites 212, and/or internal databases 214 (e.g., WORKDAY^{®} and/or CONFLUENCE^{®}).

In step 216, the system 100 can determine specific data to collect from the data sources identified in step 208. For example, the system 100 can collect participant data such as job title data 218, educational background data 220, certification data 222, and/or public post data 224.

In step 226, the system 100 can implement user authorization. For example, user consent can be secured for accessing private data, aligning with data privacy laws. Step 228 can include ensuring compliance with data privacy law, for example using participant consent module 44 and privacy law database 46.

In step 230, the system 100 can extract participant data using APIs 32 and/or the web scraping tool 42. In step 232, the participant data from various sources can be consolidated in a centralized processing system, such as the first database 28.

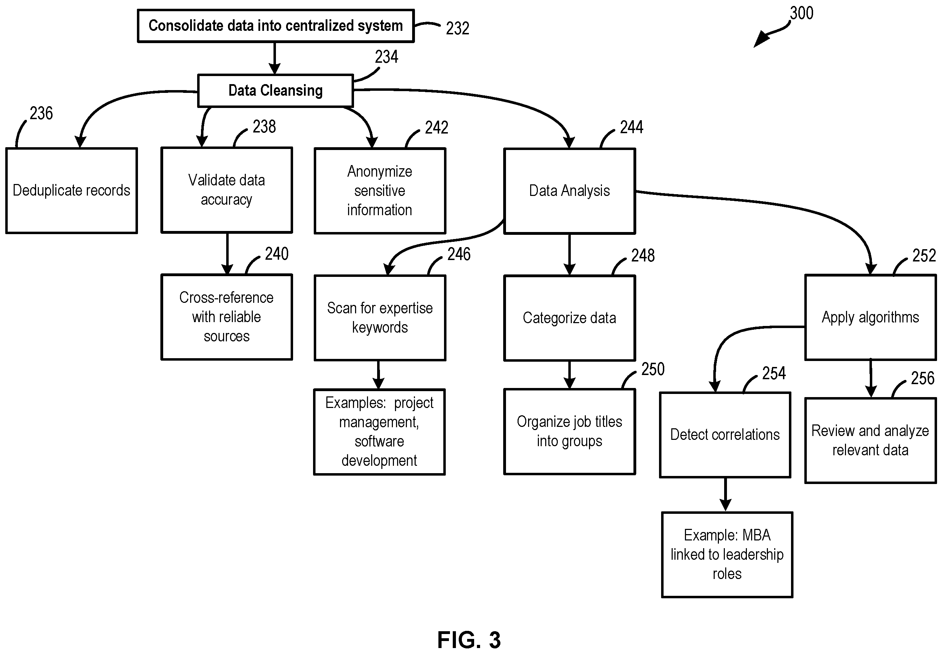

FIG. 3 shows a method 300 for data consolidation, in accordance with various embodiments. Method 300 can be a continuation of method 200 in accordance with various aspects. In various aspects, the data consolidation step 232 of FIG. 2 can include data cleaning (step 234). Step 236 can include deduplication of participant data records to eliminate redundancy as described herein. Steps 238 and 240 can include validating data accuracy by cross-referencing with reliable sources for example. Sensitive data can be anonymized or pseudonymized to maintain privacy (step 242).

In various aspects, method 300 further includes data analysis (step 244). The system 100 can scan participant data for expertise keywords and phrases indicating expertise (step 246). For example, keywords or phrases such as "project management" and "software development" can be scanned and categorized. Step 248 can include categorizing the participant data. Step 250 can include organizing the participant data (e.g., job titles, educational backgrounds, certifications, etc.) into standardized categories for easier analysis. In various aspects, the data can undergo semantic analysis as described herein to enhance data interpretation.

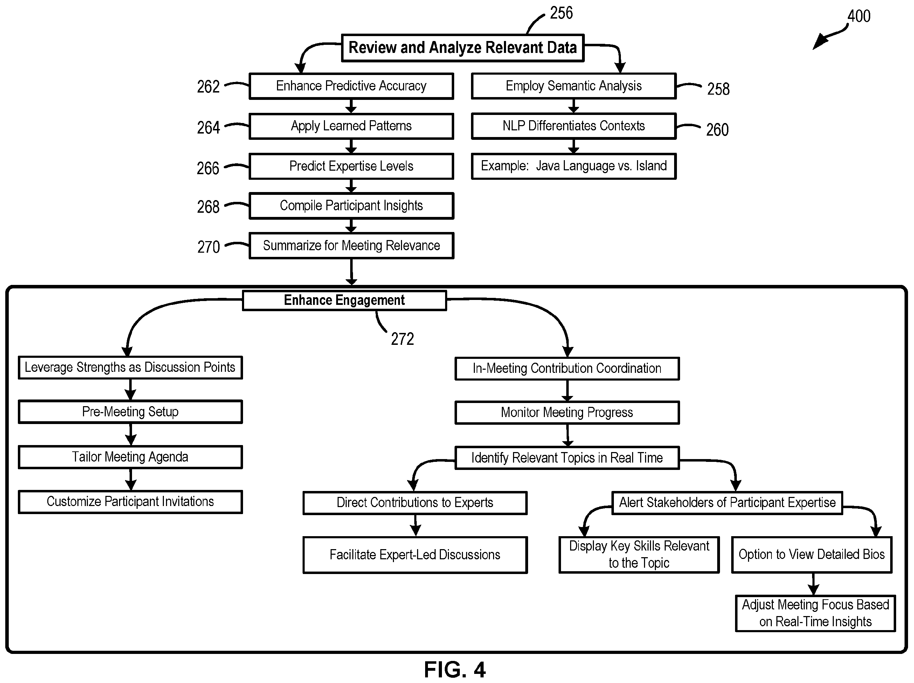

Step 252 includes applying algorithms to further analyze the categorized data. For example, step 254 includes analyzing the categorized data to detect correlations and patterns (e.g., MBA linked to leadership roles). Step 256 includes reviewing and analyzing relevant data (see FIG. 4).

FIG. 4 shows a method 400. Method 400 can be a method for predictive accuracy and engagement enhancement, in accordance with various embodiments. Method 400 can be a continuation of method 300 in accordance with various aspects. In various aspects, step 256 can include semantic analysis of participant data (step 258). For example, the NLP 40 can identify the context and nuance of the speech of each of the plurality of meeting participants in order to determine sentiment, differentiate contexts, and assist in enhancing the determination of participant skill level (step 260). For example, contextual differentiation/analysis can be used to determine whether a user using the term "Java" to refer to the computer language or the island.

Step 262 includes enhancing predictive accuracy. For example, algorithms analyze the categorized data to detect correlations and patterns, applying predictive models to assess participants' expertise levels. Step 264 includes applying a learned pattern to the participant data. For example, a person having an MBA and an engineering degree may have a strong understanding of the leadership roles in a tech company. Step 266 can include predicting expertise levels of the meeting participants.

One or more predictive models can be used to assess participant's expertise levels. An example basic formula for expertise assessment using the participant data is provided as: Expertise Assessment = (Keyword Categorization + Contextual Analysis × Predictive Modeling). Keyword Categorization represents a numeric variable that tallies the occurrences or the relevance scores of specific keywords linked to expertise areas. Contextual Analysis can be a weighting factor from 0 to 1 (e.g., 0 means no significant context or nuanced information found; 1 means a high level of contextual relevance and nuanced understanding (influences the expertise evaluation)). A "0" can mean the predictive models have no influence on the expertise assessment. A "1" can mean the predictive models fully influence the assessment. Predictive Modeling can be an output of a predictive model that gives a score to the current expertise assessment. The higher the score, the more expertise or knowledge the participant has on the expertise. Predictive modeling can be performed by the AI learning module 50 and/or the host device 22 in accordance with various aspects. The AI learning module 50 and/or the host device 22 can adjust the algorithm used by the participant skill determination engine 26 to determine participant skill levels if the input score for a predetermined number of current meeting topics is beneath a preset level.

In various aspects, the system can use self-identified expertise attributes to ensure that the system can leverage the participants' own assessments of their skills and knowledge. Self-identified expertise attributes may be particularly useful if the participant's digital footprint is weak in the area. In various aspects a participant (e.g., participant 14A) can send self-identified expertise attributes to the participant skill determination engine 26 via the participant device (e.g., participant device 14). In various aspects, the participant skill determination engine 26 can send a request to one or more participants requesting self-identified expertise attributes. The self-identified expertise attributes can be stored in the first database 28.

The system 100 can compile a summarized overview of participant insights, optimized for relevance to the meeting's context (step 268). Based on compiled insights, the system 100 can determine and summarize the relevance of each participant's expertise to the meeting topic (step 270). Participant insights can be used to enhance meeting engagement (step 272). For example, participant insights can be provided to the host 24 via the host device 22. The participant insights can be received before a meeting to assist with pre-meeting setup, such as determining who to invite to the meeting and/or to tailor a meeting agenda based upon participant skills and knowledge. In various aspects, meeting invitations can be tailored based on the relevance of each participant's expertise to the meeting topic. For example, participants lacking necessary expertise can be made optional or uninvited to streamline focus.

During meetings, the system 100 can direct contributions from non-experts to consult with experts, enhancing discussion efficiency and outcome relevancy. The system 100 can monitor meeting progress and identify relevant topics in real time. By directing contributions to experts, the system 100 can facilitate expert-led discussions. The system 100 can alert stakeholders of participant expertise. For example, the system 100 can display skills relevant to the topic. The system 100 can display which participants have those relevant skills. The system 100 can provide an option to a host or participant to view detailed bios of the meeting participants in case they would like to learn more about their knowledge and background. The system 100 can facilitate adjustments to the meeting focus based on real-time insights.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching may be used throughout the figures to denote different parts but not necessarily to denote the same or different materials.

Methods, systems, and articles are provided herein. In the detailed description herein, references to "one embodiment", "an embodiment", "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A computerized meeting system configured to provide advanced data to determine the respective skills of meeting participants, wherein the computerized meeting system comprises:
a meeting server configured to host meetings;
a plurality of participant devices in communication with the meeting server, wherein each participant device is assigned to a unique participant;
a participant skill determination engine in communication with the meeting server and with a host device that is assigned to a meeting host;
a first database of participant attributes in communication with the participant skill determination engine, the first database of participant attributes including self-identified expertise attributes; and
a second database of participant participation in prior meetings and in a current meeting, wherein the second database is in communication with the participant skill determination engine;
wherein the participant skill determination engine is configured to:
receive a meeting topic from the meeting server during the current meeting;
based on the topic, query the first database and the second database to determine the name of a participant suited to address the topic; and
communicate the participant name to the host device.

2. The computerized meeting system of claim 1, wherein after the participant name is communicated to the host device, the host device is configured to query a unique one of the plurality of participant devices assigned to the participant suited to address the topic, wherein the query regards the topic.

3. The computerized meeting system of claim 1 or claim 2, wherein the first database or the second database is resident on a backend server, the meeting server, or the participant skill determination engine and/or wherein the computerized meeting system further comprises a speech recognition processor configured to generate text from spoken language during the current meeting, and a large language module (LLM) configured to analyze the text.

4. The computerized meeting system of any preceding claim, wherein the host device is configured to initiate the participant skill determination engine to search the first database and the second database for each meeting participant.

5. The computerized meeting system of any preceding claim, further comprising one or more APIs in communication with the first database wherein each of the one or more APIs is configured to (a) communicate with at least one authorized private data source that includes private data related to the skill of a meeting participant, and (b) cause the private data to be transmitted to the first database.

6. The computerized meeting system of any preceding claim, further comprising a web scraping tool in communication with the first database, wherein the web scraping tool is configured to collect public data from publicly available sources, including social media and professional websites, and to transfer the public data to the first database and optionally wherein participant consent is secured for accessing the participant's data from the at least one authorized private data source, wherein the computerized meeting system optionally further includes a database of privacy laws in communication with the first database and the one or more APIs, and data of at least one authorized private data source is collected in accordance with privacy laws in the database of privacy laws.

7. The computerized meeting system of any preceding claim, further comprising a processor configured to deduplicate data in the first database and the second database in order to eliminate redundancy to assist in obtaining accurate respective skills of meeting participants.

8. A computerized method for providing advanced data to determine the respective skills of meeting participants, wherein the computerized method comprises the following steps:
the meeting server hosting a current meeting;
a plurality of meeting participants joining the current meeting by using participant devices in communication with the meeting server, and wherein each participant device is assigned to a unique one of the plurality of participants;
a participant determination engine collecting attributes of each of the plurality of meeting participants from a first database, wherein the attributes were obtained from one or more private databases and one or more public databases, the attributes include self-identified expertise attributes;
the participant determination engine collecting attributes of each of the plurality of meeting participants from a second database, wherein the attributes are based on participant participation in prior meetings and in the current meeting; and
the meeting server providing a meeting topic, and keywords and phrases related to the topic, to the participant skill determination engine during the current meeting, and based on the topic and keywords and phrases, the participant skill determination engine determining the name of a meeting participant suited to address the topic and communicating the participant name to a host device.

9. The computerized method of claim 8, further comprising the step of providing to the participant skill determination engine to assist in determining the name of a meeting participant suited to address the topic, each meeting participant's (a) job title, (b) education background, (c) work history, (d) hobbies, and (e) professional certifications.

10. The computerized method of claim 8 or claim 9, further comprising the steps of using a natural language processor, NLP, in communication with the participant skill determination engine, wherein the NLP identifies context and nuance of the speech of each of the plurality of meeting participants stored in the second database, in order to determine sentiment and assist in enhancing the determination of participant skill level.

11. The computerized method of any of claims 8 to 10, further comprising the steps of (a) using algorithms to analyze a categorized data to detect correlations and patterns, and (b) applying predictive models to assess each participant's skill level for a topic.

12. The computerized method of any of claims 8 to 11 that further comprises the step of the meeting server and participant skill determination engine compiling a summarized overview of the current meeting, in which the overview provides a rating of how accurately the participant skill determination engine participant skill level was assessed for each topic.

13. The computerized method of any of claims 8 to 12 that further comprises the step of, based on input related to the topic by the meeting participant selected by the participant skill determination engine as suited to address the topic, the meeting host or the participant skill determination engine, determining a quality of the input to the topic, and assigning an input score to the input and optionally wherein the computerized method further comprises using an AI learning module in communication with the participant skill determination engine, wherein the AI learning module or the host device changes an algorithm used by the participant skill determination engine to determine participant skill levels if the input score for a predetermined number of current meeting topics is beneath a preset level.

14. A computerized meeting apparatus configured to provide advanced data to determine the respective skill of meeting participants, wherein the computerized meeting apparatus comprises: (a) a meeting server; (b) a plurality of participant devices in communication with the meeting server, wherein each participant device is assigned to a unique participant; (c) a participant skill determination engine in communication the meeting server and with a host device; (d) a first database of participant attributes gathered from authorized private data sources and public data sources; (e) a second database of participant participation in prior meetings and in a current meeting; and (f) a processor and a tangible, non-transitory memory configured to communicate with the processor, the non-transitory memory having stored instructions which, when executed by the processor, are configured to cause the computerized meeting apparatus to execute a method including the following steps:
the meeting server starting the current meeting;
each of the plurality of user devices connecting to the current meeting via the meeting server;
the meeting server or the host device communicating a topic of the current meeting to the participant skill determination engine;
the participant skill determination engine, based on the topic, querying the first database and the second database to determine the name of a participant suited to address the topic and to communicate the participant name to the host device; and
a host either querying the participant identified by the participant skill determination engine as suited to address the topic, or instead direct a query to a known expert on the topic in order to enhance discussion efficiency and outcome relevancy.

15. The computerized meeting apparatus of claim 14, wherein when the stored instructions are executed by the processor, are configured to provide one or more topics to the participant skill determination engine prior to the start of the current meeting, and based on the one or more topics, the participation skills engine queries the first database and the second database to determine a plurality of names of participants suited to attend the current meeting and to communicate the name of the plurality of participants to the host device, wherein the host device uses plurality of names of participants to tailor invitations to the current meeting and/or wherein the participant attributes comprise (a) education, (b) title, (c) type of work experience, (d) length of work experience, (e) current job title, (f) past job titles, (g) hobbies, (h) presentations, (i) awards, and (j) training courses taken.
